## Europäisches Patentamt

## European Patent Office

## Office européen des brevets

(19)

(11) Veröffentlichungsnummer: **0 111 771**

A2

(12) # EUROPÄISCHE PATENTANMELDUNG

(21) Anmeldenummer: **83111709.8**

(22) Anmeldetag: **23.11.83**

(51) Int. Cl.³: **H 01 R 4/62**
**H 01 F 41/10, B 23 K 20/02**

(30) Priorität: **22.12.82 DE 3247417**

(43) Veröffentlichungstag der Anmeldung:
**27.06.84 Patentblatt 84/26**

(84) Benannte Vertragsstaaten:
**AT BE CH FR GB IT LI NL SE**

(71) Anmelder: **MESSER GRIESHEIM GMBH**
**Hanauer Landstrasse 330**
**D-6000 Frankfurt/Main 1(DE)**

(72) Erfinder: **Theis, Werner**
**Eschenstrasse 1**
**D-8044 Lohhof(DE)**

(72) Erfinder: **Pschierer, Jürgen**
**Mittenheimerstrasse 7**
**D-8057 Eching(DE)**

(54) **Transformatoren, Drosselspulen, Transduktoren, insbesondere für Stromquellen zum Schweissen und Schneiden.**

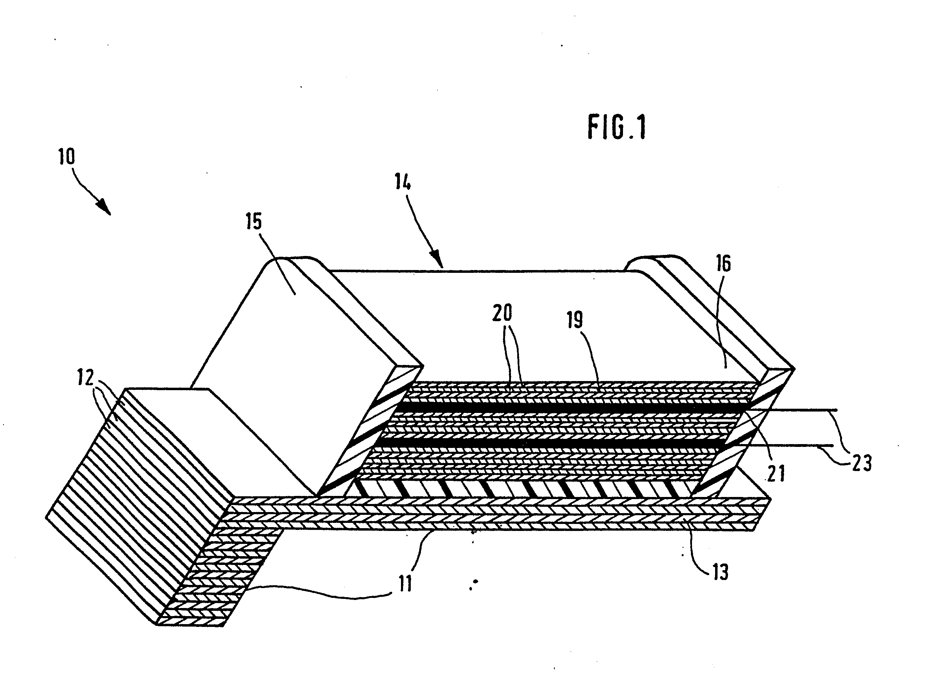

(57) Die Erfindung betrifft Transformatoren, Drosselspulen, Transduktoren, insbesondere für Stromquellen zum Schweissen und Schneiden mit mindestens einer Spule (14), deren Wicklung (16) auf einen Spulenkörper (15) als aufgewickeltes Band (16) aus Aluminium aufgewickelt ist und die Anzapfungen (21) aufweist. Um in einfachster Art und Weise eine Verbindung zwischen Bandwicklung (16) aus Aluminiumband und einer Anzapfung (21), die vorzugsweise aus einer flexiblen Kupferleitung (23) besteht zu schaffen, die insbesondere bei kostengünstiger Herstellung und fester Verbindung einen optimalen Stromübergang gewährleistet, wird die Anzapfung (21) mit der Bandwicklung (16) durch Kaltpreßschweißen verbunden (Figur 1).

./...

FIG.1

- 1 -

MESSER GRIESHEIM GMBH                    MG 1420

Kennwort: Anzapfungen bei Bandwicklungen      EM 1072

Erfinder: Theis, Pschierer                Ordner: VII

## Transformatoren, Drosselspulen, Transduktoren, insbesondere für Stromquellen zum Schweißen und Schneiden

Die Erfindung betrifft Transformatoren, Drosselspulen, Transduktoren, insbesondere für Stromquellen zum Schweißen und Schneiden mit mindestens einer Spule, deren Wicklung auf einen Spulenkörper als aufgewickeltes Band aus Aluminium aufgewickelt ist und die Anzapfungen aufweist.

Bei Transformatoren zum Schweißen erfolgt das Einstellen des Schweißstromes durch einen Stufenschalter, durch den Transformatorenwicklungen, die aus Kupferdraht bestehen, zuschaltbar oder wegschaltbar sind. Zur Zuschaltung oder Wegschaltung der Wicklungen sind mit der Transformatorwicklung verbundene Anzapfungen vorgesehen. Diese Anzapfungen sind als flexible Leitungen ausgebildet. Dadurch ist eine Verlegung der Anzapfungen zu dem an der Schalttafel der Steuerung der Schweißstromquelle angeordneten Stufenschalter in einfachster Art und Weise möglich. Dabei ist die getrennte Anordnung von Transformator und Steuerung mit dem Stufenschalter aus Montagegründen vorgegeben.

Aus dem Fachbuch Fachkunde Elektrotechnik, Europa-Lehrmittel-Verlag, Jg. 1970, Seite 180 ist es bekannt bei Transformatoren Wicklungen aus einem Aluminiumband auf einen Spulenkörper aufzuwickeln. Derartige Transformatoren mit Bandwicklung sind einfacher und kostengünstiger herstellbar als Kupferdrahtwicklungen.

Um einen Transformator mit einer Bandwicklung aus Aluminium mit einem Stufenschalter verbinden zu können müssen Anzapfungen mit der Bandwicklung verbunden werden.

Der Erfindung liegt die Aufgabe zugrunde, in einfachster Art und Weise eine Verbindung zwischen der Bandwicklung aus Aluminiumband und einer Anzapfung, die vorzugsweise aus einer flexiblen Kupferleitung besteht zu schaffen, die insbesondere bei kostengünstiger Herstellung und fester Verbindung einen optimalen Stromübergang gewährleistet.

Diese Aufgabe wird erfindungsgemäß dadurch gelöst, daß die Anzapfungen mit der Bandwicklung durch Kaltpreßschweißen verbunden ist.

Zur Erzielung eines optimalen Stromübergangs, der insbesondere bei in Transformatoren fließenden hohen Strömen im Hinblick auf eine geringe Erwärmung in der Übergangsstelle erforderlich ist und zur Vermeidung des Aufspleisens und Brechens bei einer aus mehreren flexiblen Kupfereinzeldrähten bestehenden Anzapfung wird vorteilhaft deren eines Ende von einem Aluminium-Rohr umgeben und dieses Ende der Anzapfung, das Aluminiumrohr und die Bandwicklung kaltpreßzusammengeschweißt.

Die mit der Erfindung erzielten Vorteile bestehen insbesondere darin, daß durch die Kaltpreßschweißung einer Wicklung aus Aluminiumband mit den Anzapfungen in einfachster Art und Weise eine Verbindung geschaffen wird, die die Vorteile der Bandwicklung wie beispielsweise kleine Spulenabmessungen, geringes Gewicht mit den Vorteilen der flexiblen Anzapfungen vereint. Dabei besteht der wesentliche Vorteil der aus Rohr und flexibler Kupferleitung zusammengesetzten Anzapfungen einerseits in der guten mechanischen Verbindung von Wicklung aus Aluminiumband mit Aluminiumrohr aufgrund der gleichen Werkstoffe sowie der guten mechanischen Verbindung der aus Einzeldrähten bestehenden Kupferleitung in dem Aluminium-Rohr (kein Brechen und Aufspleisen der Einzeldrähte) und andererseits in dem optimalen Stromübergang von der Bandwicklung auf die Anzapfungen. Dabei wird der optimale Stromübergang durch die erzielte geometrische Form der Anzapfung und die fest verbundene Werkstoffkombination Aluminiumband/Aluminiumrohr/Kupferleitung nach dem Kaltpreßschweißvorgang erreicht.

Vorzugsweise werden die Anzapfungen bei der Aufwicklung des Bandes aus Aluminium auf den Spulenkörper innerhalb eines Arbeitsganges kaltpreßzusammengeschweißt.

Ein bevorzugtes Ausführungsbeispiel der Erfindung ist in der Zeichnung dargestellt und wird unter Hinweis auf weitere vorteilhafte Merkmale beschrieben.

Es veranschaulicht:

Fig. 1 eine perspektivische Teilschnittdarstellung des Wicklungsaufbaus eines Transformators nach der Erfindung;

7.9.1982 0111771

- 4 -

Fig. 2   eine schematische Darstellung der
         Kaltpreßschweißung einer Anzapfung
         mit einer Bandwicklung.

Die Anordnung gemäß Fig. 1 weist einen nicht näher dargestellten Transformator 10 auf, dessen nicht näher dargestellter Eisenkern aus Einzelkernmodulen 11 besteht. Diese Einzelkernmodule 11 werden aus lamellierten Einzelblechen 12, die untereinander jeweils verbunden werden können, gebildet. Auf den Schenkelkernen 13 werden beim Zusammenmontieren des Eisenkerns die Spulen 14 aufgeschoben, bzw. die Spulen auf die Schenkelkerne über z.B. Eckwinkel direkt aufgewickelt. (Diese Technik erspart vorteilhaft den Spulenkörper und den Arbeitsgang Spule auf Schenkelkern schieben).

Die Spulen 14 bestehen aus einem Spulenkörper 15, der eine Bandwicklung 16 trägt. Der Spulenkörper 15 ist z.B. aus einzelnen Stücken oder in Schachtelbauweise zusammengesetzt und isoliert die Bandwicklung 16 gegen den Eisenkern. Die auf den Spulenkörper 15 aufgewickelte Bandwicklung 16 ist aus einem Aluminiumband hergestellt. Das Aluminiumband weist bevorzugt Banddicken 17 von 0,02 bis ca. 3 mm bei einer Bandbreite 18 von 50 bis 150 mm auf. Da bei diesen Transformatoren 10 mit Aluminiumband jede Lage 19 aus einer Wicklung 16 besteht, ist ein Gegensatz zur Drahtwicklung keine achsiale Windungssteigung vorhanden, so daß Einlagen und Keile überflüssig sind. Es ergibt sich ferner, ein hoher Füllfaktor, da zwischen den Windungen 20 keine Hohlräume vorhanden sind. Die sich daraus ergebenden Vorteile sind insbesondere in den minimalen Spulenabmessungen und dem geringen Gewicht bei hoher Spannungsfestigkeit zu sehen.

Das Einstellen des Schweißstromes bei dem Transformator 10 erfolgt über einen nicht näher dargestellten Stufenschalter, welcher bei der Wicklung 16 eine bestimmte Anzahl von Windungen 20 zu- oder wegschaltet. Diese Zu- oder Wegschaltung der Windungen 20 wird über aus der Spule 14 herausgeführte Anzapfungen 21 erreicht.

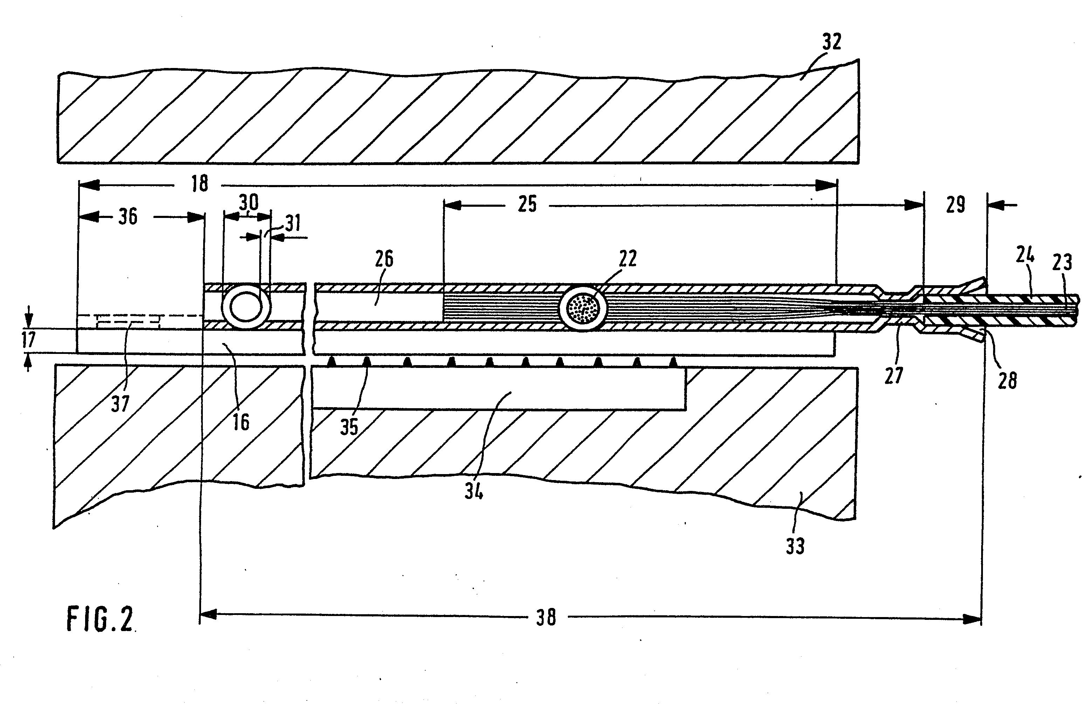

Die Anzapfungen 21 sind als flexible aus mehreren Kupfereinzeldrähten 22 bestehende Kupferleitungen 23 ausgebildet, die von einer Kunststoffisolierhülle 24 umgeben sind. Das eine Ende der über eine Länge 25 abisolierten Kupferleitung 23 ist in einem Aluminiumrohr 26 durch Zusammenquetschen des Rohres 26 im Bereich 27 (Fig. 2) so befestigt, daß die mit der Kunststoffisolierhülle 24 umgebene Kupferleitung 23 in dem trichterförmigen Rohrende 28 mit der Länge 25 angeordnet ist. Diese Anzapfung 21 kann in einfachster Art und Weise unabhängig von der Bandwicklung 16 der Spule 14 und unabhängig von dem Verbindungsorgan vorgefertigt werden. Das Aluminiumrohr 26 weist vorzugsweise ein Verhältnis des Außendurchmessers 30 zur Wandstärke 31 von 10 : 1 auf (z.B. Außendurchmesser 5mm, Wandstärke 0,5mm). Die Bandbreite 18 und -dicke 17 der Bandwicklung 16 aus Aluminiumband beträgt bei diesen Rohrabmessungen z.B. 150mm (Breite) und 0,05mm (Dicke).
In Fig. 2 ist eine schematische Darstellung der Kaltpreßschweißung der flexiblen Anzapfung 18 mit der Bandwicklung 16 aus Aluminiumband näher veranschaulicht. Dabei erfolgt der Kaltpreßschweißvorgang vorzugsweise während dem Spulenwickeln innerhalb einer automatischen Bandaufwicklung in einer Bandwickelmaschine.

Eine besonders vorteilhafte Spulenfertigung ergibt sich dadurch, daß zunächst zur Herstellung der Anzapfung 21 die Kupferleitung 23 abisoliert und das vorgefertigte Aluminiumrohr 26 aufgeschoben und mit den Kupfereinzeldrähten 22 durch eine Quetschverbindung 27 zueinander fixiert und positioniert werden, anschließend das Aluminiumrohr 26 auf das Aluminiumband 16 entsprechend Fig. 2 gelegt und kaltpreßverschweißt wird.

Die Kaltpreßschweißverbindung entsteht dabei durch Anwenden von Druck bei Raumtemperatur oder leicht erhöhter Temperatur in festem Zustand der Bandwicklung 16 aus Aluminiumband und der Anzapfung 21 aus Kupferleitung 23 und Aluminiumrohr 26.
Dabei hat sich in der Praxis die Werkstoffkombination Aluminiumrohr 26 mit Kupferleitung 23 auf Aluminiumband 16 als besonders vorteilhaft erwiesen. Bei Anzapfungen mit Kupferrohren (anstelle von Aluminiumrohren) muß vor dem Kaltpreßschweißen die Oxydhaut des Kupferrohres entfernt werden, da sonst keine ausreichende Kaltpreßschweißung gewährleistet ist. Im Gegensatz zu Aluminiumrohren wird bei Kupferrohren deshalb die Oxydhaut entfernt.
Die Punktverschweißungen der Anzapfung 21 mit der Bandwicklung 16 werden durch ein- oder doppelseitig wirkende Preßstempel 32,33 hergestellt. Die dazu erforderlichen Werkzeuge 34 werden in die Preßstempel eingebaut, in denen eine größere Anzahl von Schweißspitzen 35 vorgesehen sind.

Die zwischen den Preßstempeln 32,33 angeordnete Anzapfung 21 aus Aluminiumrohr 26 und Kupferleitung 23 weist eine um die durch die Kaltpreßschweißung erfolgende plastische Längenänderung verringerte Länge 36 auf.

Die mittels der Kaltpreßschweißung auf die Bandwicklung 16 geschweißte Anzapfung 21 weist nach der Schweißung ein plattgepreßtes Aluminiumrohr 26 mit quaderförmigem Querschnitt 37 und eine Länge auf, die der Bandbreite 18 der Bandwicklung 16 entspricht. Durch das sich nach der Kaltpreßschweißung über die vollständige Bandbreite 18 der Bandwicklung 16 erstreckende Aluminiumrohr 26 wird ein optimaler elektrischer Stromübergang von Aluminiumband 16 auf Aluminiumrohr 26 erreicht.

**0111771**

- 7 -

Es hat sich überraschenderweise gezeigt, daß es hierbei
nicht erforderlich ist, auch die flexiblen Kupfereinzeldrähte 22 über die gesamte Länge 38 innerhalb des Aluminiumrohres 26 vorzusehen. Vielmehr ist es ausreichend,
diese Einzeldrähte 22 nur auf einem Viertel der Bandbreitenlänge 18 vorzusehen.

Durch die bei der Kaltpreßschweißung erzeugte innige
Berührung der Kontaktflächen der Kupferleitung 23 und
des Aluminiumrohres 26 können an die Verbindungsstellen
nahezu keine Gasatome der Umgebungsatmosphäre gelangen.
Dadurch, sowie durch das Tauchen des fertig montierten
Transformators im Vakuumtauchlack wird eine Kontaktkorression der in der Spannungsbreite weit auseinanderliegenden Werkstoffe Kupfer/Aluminium vorteilhaft verhindert.

In dem vorangegangenen Ausführungsbeispiel wurde die
Erfindung anhand eines Transformators 10 näher beschrieben.
Selbstverständlich sind die Anzapfungen 21 mit der Bandwicklung 16 von Drosselspulen, Transduktoren und entsprechenden elektrischen Maschinen vorteilhaft kaltpreßzusammenzuschweißen.

Gr/Ha

Patentansprüche

1. Transformatoren, Drosselspulen, Transduktoren, insbesondere für Stromquellen zum Schweißen und Schneiden mit mindestens einer Spule, deren Wicklung auf einen Spulenkörper als aufgewickeltes Band aus Aluminium aufgewickelt ist und die Anzapfungen aufweist, dadurch gekennzeichnet, daß die Anzapfungen (21) mit der Bandwicklung (16) durch Kaltpreßschweißen verbunden sind.

2. Transformatoren, Drosselspulen, Transduktoren nach Anspruch 1, dadurch gekennzeichnet, daß die Anzapfung (21) als flexible Kupferleitung (23) ausgebildet ist, deren eines Ende (25,29) von einem Aluminium-Rohr (26) umgeben ist, und daß das Ende (25,29) der Anzapfung (21), das Aluminium-Rohr (26) und die Bandwicklung (16) kaltpreßzusammengeschweißt sind.

3. Transformatoren, Drosselspulen, Transduktoren nach Anspruch 1, dadurch gekennzeichnet, daß die Anzapfung (21) als flexible Kupferleitung (23) ausgebildet ist, deren eines Ende (25,29) von einem von der Oxydhaut befreitem Kupfer-Rohr umgeben ist, und daß das Ende (25,29) der Anzapfung (21), das Kupfer-Rohr und die Bandwicklung (16) kaltpreßzusammengeschweißt sind.

Gr/Hi

# FIG.1

0111771

MG 1420

FIG.2